# FASCICULE DE BREVET EUROPEEN

(11) **EP 0 689 163 B1**
(45) Date de publication et mention de la délivrance du brevet: **15.12.1999**
(21) Numéro de dépôt: 95108797.2
(22) Date de dépôt: 08.06.1995
(51) Int. Cl.: G06K 19/077

(54) **Carte a memoire**
Speicherkarte
Memory card

(30) Priorité: 24.06.1994 FR 9407906
(43) Date de publication de la demande: 27.12.1995
(73) Titulaire: SCHLUMBERGER Systèmes, 92120 Montrouge (FR)
(72) Inventeur: Monicault, André, F-92140 Clamart (FR)
(74) Mandataire: Lemoyne, Didier

(56) Documents cités:
- GB-A- 2 149 209
- US-A- 4 738 473
- PATENT ABSTRACTS OF JAPAN vol. 10, no. 354 (P-521) 28 Novembre 1986 & JP-A-61 151 791 (HITACHI LTD) 10 Juillet 1986

## Description

La présente invention concerne une carte à mémoire avec une zone métallique de contacts électriques.
De façon plus précise l'invention concerne une telle carte à mémoire contenant des unités consommables par exemple une télécarte.

Les telles cartes à mémoire sont vendues aux différents points de ventes comme par exemple dans les bureaux de poste, dans les stations-service, chez des trafiquants. Lesdites cartes contiennent un nombre prédéterminé et fixe d'unités consommables pour lesquelles l'acheteur et utilisateur potentiel d'une telle carte paye en avance et obtient dans la plupart des cas la totalité des unités consommables.

Mais, on a déjà rapporté certaines actions frauduleuses où des trafiquants, par exemple, vendent entre autres des télécartes dites neuves et vierges alors qu'elles ont déjà été utilisées.

Afin d'éviter une telle fraude et afin de garantir à l'acheteur d'une telle télécarte qu'il paye pour une carte neuve et disposant de toutes ses unités consommables, il faut un moyen qui permette que l'acheteur puisse détecter facilement si la carte a déjà été utilisée et tout cela au moment de l'achat sans avoir besoin d'introduire ladite carte "neuve" dans le téléphone le plus proche.

On connaît déjà une méthode qui consiste à envelopper une carte à mémoire dans un sachet transparent et bien fermé qui rende impossible toute ouverture dudit sachet sans le détruire d'une manière facilement détectable par l'acheteur.

L'inconvénient desdits sachets est que les cartes emballées par ceux-ci sont soit plus épaisses ou grandes que les cartes sans enveloppe, soit non utilisables dans des machines existantes de distribution automatiques, soit trop coûteuses.
C'est donc l'objet de la présente invention de fournir une carte améliorée qui permettra sans grand effort, d'indiquer si la carte a déjà été utilisée avant l'achat.

Afin d'atteindre ce but l'invention propose une carte comprenant un module électronique avec une mémoire et une zone de contacts électriques en métal, dont au moins une partie est couverte d'une couche en matériau grattable, cette dernière étant appliquée avant que la carte ne soit livrée aux points de vente.

On comprend qu'une couche grattable, préférablement caoutchouteuse, et utilisée en tant que cachet positionné sur les contacts de la carte selon l'invention, indiquerait sans doute des traces d'une utilisation dans un lecteur de carte au cas où un imposteur potentiel chercherait à utiliser une telle carte sans avoir gratté ladite couche.

De plus et sans restreindre l'idée de l'invention, il sera possible de couvrir d'autres régions de la surface d'une telle carte : le numéro de série de la carte ou des symboles ou graphismes par exemple.

Comme dans le cas de tickets grattables d'une loterie, l'acheteur d'une telle carte pourrait gagner un cadeau, si cette seconde partie de la carte, après grattage, fait apparaître un gain quelconque.

De telles loteries ont également montré que le grattage d'une telle couche est facile et s'effectue rapidement. L'application prévue par l'invention de la couche grattable lors de la fabrication de la carte garantit que lorsque la carte aura quitté le site du fabriquant personne ne pourra l'utiliser sans provoquer sur la couche protectrice des traces détectables de ladite utilisation.

Toutes ces couches grattables selon l'invention peuvent être imprimées sur la carte par sérigraphie. Cela permet d'obtenir facilement une couche très mince telle qu'aucune modification des emballages existants des cartes ne soit nécessaire ni aucune modification par rapport aux machines distributeurs de cartes. Egalement la sérigraphie permet d'imprimer n'importe quelle forme ou couleur en tant que décoration d'une telle carte selon l'invention.

De plus le débris engendré par le grattage d'une couche grattable est pratiquement nul par rapport aux sachets mentionnés ci-dessus.

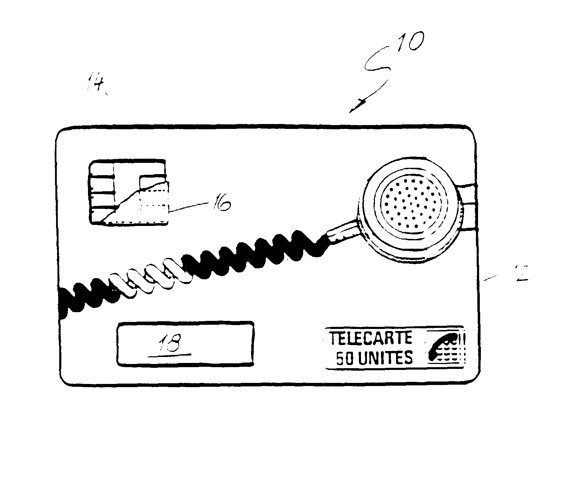

L'invention sera mieux comprise à la lecture de la description qui suit d'un mode préféré de réalisation d'une carte à mémoire selon l'invention à titre d'exemple non limitatif. La description se réfère à une seule figure.

Une carte 10 en principe bien connue qui comporte dans une cavité de son corps 12 en plastique un module mémoire électronique avec une zone de contacts métalliques 14.

Comme le montre la figure ladite zone de contacts 14 est couverte par une couche grattable 16 qui selon l'exemple illustré a déjà été partiellement grattée afin de dégager les contacts 14.

La surface de la carte 10 est également munie d'une seconde zone 18 couverte d'une couche grattable qui sert comme dans le cas de tickets grattables, de jeux de loterie à couvrir des symboles, graphismes, numéros etc...

## Revendications

1. Carte à mémoire comprenant un module électronique avec une mémoire et une zone de contacts électriques en métal,
caractérisée en ce qu'au moins une partie de ladite zone de contacts électriques soit couverte par une couche en matériau grattable, cette dernière étant appliquée avant que la carte ne soit livrée aux points de vente.

2. Carte à mémoire selon la revendication 1, caractérisée en ce que la couche grattable consiste en une impression d'une encre grattable caoutchouteuse.

3. Carte à mémoire selon une des revendications précédentes,
caractérisée en ce que ladite couche grattable est appliquée lors de la fabrication de la carte.

4. Carte à mémoire selon une des revendications précédentes, caractérisée en ce que la carte est munie au moins d'une deuxième zone couverte par un matériau grattable qui cache des symboles, chiffres et ou graphismes qui pourront servir à une loterie.

5. Carte à mémoire, caractérisée en ce que la ou les couches soient appliquées sur la carte par sérigraphie

## Claims

1. A memory card comprising an electronics module having a memory and a metal electrical contact zone, the memory card being characterized in that at least one part of said electrical contact zone is covered in a layer of scratchable material which is applied before the card is delivered to points of sale.

2. A memory card according to claim 1, characterized in that the scratchable layer consists of printed-on rubbery scratchable ink.

3. A memory card according to any preceding claim, characterized in that said scratchable layer is applied at the time of manufacturing the card.

4. A memory card according to any preceding claim, characterized in that the card is provided with at least one second zone covered in a scratchable material that hides symbols, digits and/or graphics which could serve in a lottery.

5. A memory card according to any preceding claim, characterized in that the layer(s) are applied to the card by screen printing.

## Patentansprüche

1. Speicherkarte umfassend ein elektronisches Modul mit einem Speicher und einer Zone metallischer elektrischer Kontakte, dadurch gekennzeichnet, daß wenigstens ein Teil der Zone metallischer elektrischer Kontakte durch eine Schicht aus abradierbarem Material bedeckt ist, die aufgebracht wird, bevor die Karte an Verkaufsstellen geliefert wird.

2. Speicherkarte nach Anspruch 1, dadurch gekennzeichnet, daß die abradierbare Schicht aus einem Aufdruck aus abradierbarer, kautschukartiger Tinte besteht.

3. Speicherkarte nach einem der vorhergehenden Ansprüche, dadurch gekennzeichnet, daß die abradierbare Schicht während der Herstellung der Karte aufgebracht ist.

4. Speicherkarte nach einem der vorhergehenden Ansprüche, dadurch gekennzeichnet, daß die Karte mit wenigstens einer zweiten durch ein abradierbares Material bedeckten Zone versehen ist, welche Symbole, Ziffern und/oder Schriften verdeckt, die für eine Lotterie dienen können.

5. Speicherkarte nach einem der vorhergehenden Ansprüche, dadurch gekennzeichnet, daß die Schicht oder die Schichten auf der Karte durch Siebdruck aufgebracht sind.
